# EUROPÄISCHE PATENTSCHRIFT

(11) **EP 2 197 613 B1**
(45) Veröffentlichungstag und Bekanntmachung des Hinweises auf die Patenterteilung: **14.09.2011**
(21) Anmeldenummer: 08840624.4
(22) Anmeldetag: 15.10.2008
(51) Int. Cl.: B23B 51/02

(54) **RUNDLAUFWERKZEUG, INSBESONDERE BOHRER**
ROTARY TOOL, IN PARTICULAR A DRILL
OUTIL ROTATIF, EN PARTICULIER FORET

(30) Priorität: 17.10.2007 DE 102007050050
(43) Veröffentlichungstag der Anmeldung: 23.06.2010
(73) Patentinhaber: Kennametal Inc., Latrobe, PA 15650-0231 (US)
(72) Erfinder: KAUPER, Herbert, Rudolf, 91058 Erlangen (DE)
(74) Vertreter: FDST Patentanwälte
(86) Internationale Anmeldenummer: PCT/EP2008/008719
(87) Internationale Veröffentlichungsnummer: WO 2009/049870

(56) Entgegenhaltungen:
- DE-U1- 20 209 767
- GB-A- 2 433 713
- JP-A- 61 004 611

## Beschreibung

Die Erfindung betrifft ein Rundlaufwerkzeug, insbesondere einen Bohrer, mit einem sich entlang einer Rotationsachse erstreckenden Schneidkopf, der mehrere sich radial nach außen erstreckende Hauptschneiden aufweist, die jeweils am Umfang des Schneidkopfes an einem eine Eckenfase aufweisenden Schneideck enden.

Ein derartiges als Rundlaufwerkzeug ausgebildetes Zerspanungswerkzeug ist beispielsweise aus der DE 202 09 767 U1 zu entnehmen. Der Oberbegriff von Anspruch 1 basiert auf diesem Dokument.

Beim Zerspanungsvorgang beispielsweise mit Bohrern aber auch mit Hilfe von Reibahlen, Fräsern, insbesondere Schaftfräsern, Stufenbohrer, Tieflochbohrer oder so genannten Dreischneider, besteht allgemein das Problem, dass bei diesen rundlaufenden Werkzeugen das Schneideck sowohl mechanisch als auch thermisch hoch belastet ist. Um diese Belastung zu verringern ist es bekannt, so genannte Eckenfasen am Schneideck vorzusehen. Durch diese Eckenfase läuft die Hauptschneidkante nicht geradlinig zum Umfang aus. Es ist daher am Übergang zwischen der Hauptschneide zum Außenumfang kein scharfspitziges Schneideck ausgebildet. Durch diese Maßnahme wird daher insgesamt das Schneideck weniger belastet und damit kann die Standzeit des Zerspanungswerkzeugs erhöht werden. Gleichzeitig besteht jedoch das Problem, dass beim Ausbilden von Durchtrittsöffnungen, beispielsweise von Durchgangsbohrungen, ein unerwünschter Grat am Bohrlochausgang verstärkt wird. Dies erfordert oftmals eine Nachbehandlung des Grats, um die geforderte Bohrqualität zu erreichen.

Um einen "Ausfransen des Bohrlochs" zu begegnen, ist bei dem aus der DE 202 09 7676 U1 zu entnehmenden Spiralbohrer vorgesehen, dass sich an eine jeweilige Hauptschneide eine Nachbearbeitungs-Nebenschneide anschließt. Eine sich an die Hauptschneide anschließende Freifläche erstreckt sich daher bis zu der jeweiligen, der jeweiligen Hauptschneide zugeordnete Nachbearbeitungs-Nebenschneide. Die Nebenschneide ist hierbei gegenüber der Hauptschneide axial zurückversetzt angeordnet. Der Erfindung liegt die Aufgabe zugrunde, ein rundlaufendes Zerspanungswerkzeug anzugeben, das eine hohe Standzeit gewährleistet und zugleich die Ausbildung von Durchgangsöffnungen mit einem möglichst geringen Grat erlaubt.

Die Aufgabe wird gemäß der Erfindung gelöst durch ein Rundlaufwerkzeug mit den Merkmalen des Anspruchs 1. Das Rundlaufwerkzeug ist hierbei insbesondere ein Bohrer. Die erfindungsgemäßen Merkmale lassen sich jedoch auch bei anderen Rundlaufwerkzeugen, wie beispielsweise Reibahlen, Fräsern, insbesondere Schaftfräsern, Stufenbohrern, Tieflochbohrer, etc. einsetzen. Das Rundlaufwerkzeug kann hier sowohl einstückig als auch modular ausgebildet sein. Bei einem modularen Werkzeug ist üblicherweise der Schneidkopf als separates Element austauschbar in einem Grundkörper befestigt.

Das Rundlaufwerkzeug weist einen sich entlang einer Rotationsachse erstreckenden Schneidkopf auf, der mehrere, insbesondere zwei sich radial nach außen erstreckende Hauptschneiden aufweist. Jeweils am Umfang des Schneidkopfes enden diese Hauptschneiden an einem Schneideck, welches jeweils eine Eckenfase aufweist. Die Eckenfasen der jeweiligen Hauptschneiden sind unterschiedlich ausgebildet. Sie werden als Schruppfase und als Schlichtfase bezeichnet. Die die Schruppfase aufweisende Hauptschneide wird im Folgenden auch als Führungsfase und die die Schlichtfase aufweisende Hauptschneide als Freischneide bezeichnet. Die beiden Hauptschneiden sind unter anderem dadurch charakterisiert, dass sie in Axialrichtung betrachtet auf gleicher axialer Höhe angeordnet sind. Dies bedeutet, dass Hauptschneidenabschnitte - außer im Bereich der Eckenfasen- , die von der durch die Rotationsachse gebildeten Mittenachse gleich weit radial beabstandet sind, auf gleicher axialer Höhe angeordnet sind.

Der entscheidende Vorteil dieser Ausgestaltung ist darin zu sehen, dass durch die unterschiedliche Ausgestaltung der Eckenfasen diesen unterschiedliche Funktionen zugewiesen werden. So dient die Schruppfase für eine Erst- oder Rohbearbeitung und die Schlichtfase für eine Nach- oder Feinbearbeitung. Durch diese Maßnahme wird bei Durchtrittslöchern ein Grat aufgrund der Schlichtfase weitgehend vermieden. Gleichzeitig wird durch die Ausgestaltung der Schruppfase gewährleistet, dass die Belastung der Schneidecken reduziert und insgesamt dadurch die Standzeit erhöht ist.

Auf den Einsatz von zusätzlichen Nebenschneiden kann und wird daher vorzugsweise verzichtet, so dass sich insgesamt ein Rundlaufwerkzeug mit einfacher Geometrie ergibt, welches einfach und kostengünstig herzustellen ist. Die unterschiedliche Ausgestaltung der Fasen und ihrer Ausbildung als Schruppfase und als Schlichtfase ist insbesondere bei derartigen Rundlaufwerkzeugen von Vorteil, bei denen die Schneid- oder Zerspanungsleistung unsymmetrisch auf die Hauptschneiden aufgeteilt ist. Bei einem Rundlaufwerkzeug mit zwei Hauptschneiden vollbringt daher die eine Hauptschneide eine größere Zerspanungsleistung als die andere Hauptschneide. Die mit der größeren Zerspanungsleistung wird als Führungsschneide und die mit der geringeren Zerspanungsleistung als Freischneide bezeichnet. Die höher belastete Führungsschneide weist die Schruppfase und die geringer belastete Freischneide die Schlichtfase auf.

Zweckdienlicherweise ist daher vorgesehen, dass die Schruppfase größer als die Schlichtfase ist. Unter größer wird hierbei verstanden, dass bei der Schruppfase zur Ausbildung der Fase mehr Material als bei der Schlichtfase von dem Schneidkopf abgetragen ist. Insbesondere wird unter einer größeren Fase verstanden, dass die Breite der Fase größer ist. Die Breite der Fase ist dabei definiert durch den Abstand der Übergangspunkte einerseits zur Hauptschneide und andererseits zu der üblicherweise entlang einer Spannut verlaufenden Nebenschneide bzw. dem Bohrerumfang.

Um den Grat möglichst weit zu eliminieren und andererseits eine möglichst hohe Standzeit zu erzielen, unterscheiden sich die beiden Fasen in ihrer Größe vorzugsweise deutlich, so dass die Schruppfase zweckdienlicherweise um mehr als das Doppelte, insbesondere das Fünffache größer ist als die Schlichtfase. Insbesondere haben die Schlichtfase und die Schruppfase ein Größenverhältnis, welches zwischen 1 : 2 und 1 : 50 und bevorzugt zwischen 1 : 25 und 1 : 50 liegt. Je nach Anwendungszweck, insbesondere abhängig von dem Material des zu zerspanenden Werkstoffs und/oder dem Material des Rundlaufwerkzeugs können die Fasen als gewöhnliche Schrägfasen, als Rundfasen oder als Doppelfasen ausgebildet sein. Für die Schlicht- und Schruppfase werden hierbei vorzugsweise gleichartig ausgebildete Fasen verwendet. Alternativ besteht auch die Möglichkeit, die Schlicht- und die Schruppfasen verschiedenartig zueinander auszubilden, beispielsweise also die Schruppfase als Rundfase und die Schlichtfase als Schrägfase auszugestalten.

Zweckdienlicherweise ist weiterhin vorgesehen, dass die beiden Fasen unter dem gleichen Neigungswinkel zur Rotationsachse geneigt sind. Sie schließen zweckdienlicherweise zwischen sich einen Fasenspitzenwinkel ein, der allgemein zwischen 0° und einem durch die Hauptschneiden definierten Spitzenwinkel liegt. Der durch die Hauptschneiden definierte Spitzenwinkel wird bei einem Bohrer als Bohrerspitzenwinkel bezeichnet. Vorzugsweise liegt der Fasenspitzenwinkel hierbei im Bereich zwischen 40° und 100°.

Die unterschiedliche Ausgestaltung der Fasen wird bevorzugt bei einem asymmetrisch ausgebildeten Rundlaufwerkzeug eingesetzt, bei dem die Hauptschneiden unterschiedliche Zerspanungsleistungen erbringen. Dies wird erreicht durch die insgesamt unsymmetrische Ausgestaltung.

Vorzugsweise ist hierbei vorgesehen, dass die beiden Hauptschneiden bei einer Ausgestaltung mit zwei Hauptschneiden unter einem Teilungswinkel zueinander angeordnet sind, der von 180° verschieden ist. Der Teilungswinkel liegt hierbei vorzugsweise im Bereich zwischen 185 und 200°. Zweckdienlicherweise ist er durch eine Primzahl, insbesondere 193°, bestimmt. Allgemein gilt, dass der Teilungswinkel ungleich dem n-ten Teil von 360° ist, wobei n die Anzahl der Hauptschneiden ist.

Um bei einer derartigen asymmetrischen Ausgestaltung weiterhin einen ausreichenden Rundlauf zu gewährleisten, ist zweckdienlicherweise in Drehrichtung nachfolgend zur Führungsschneide am Außenumfang des Werkzeugs eine Stützfase vorgesehen. Ergänzend hierzu ist am Außenumfang und zwar beginnend an der Führungsschneide eine erste Stützfase vorgesehen. Aufgrund der asymmetrischen Ausgestaltung und der höheren Zerspanungsleistung der Führungsschneide wird das Zerspanungswerkzeug einseitig gegen die Bohrungswand gedrückt, so dass durch die doppelte Abstützung ein verbesserter Rundlauf erzielt ist. An der Freischneide ist demgegenüber keine oder allenfalls eine geringe Führungsfase vorgesehen, die ebenfalls in Axialrichtung entlang am Außenumfang verläuft. Die Stützfase bzw. die Führungsfasen verlaufen hierbei vorzugsweise jeweils entlang von Spannuten. Die unterschiedliche Ausbildung der Eckenfasen wird insbesondere bei einem Rundlauf- oder Bohrwerkzeug eingesetzt, wie es in der DE10 2006 025 294.2 beschrieben wird, auf die hiermit insoweit Bezug genommen wird.

Ausführungsbeispiele der Erfindung werden nachfolgend anhand der Figuren näher erläutert. Es zeigen jeweils in schematischen und teilweise vereinfachten Darstellungen:

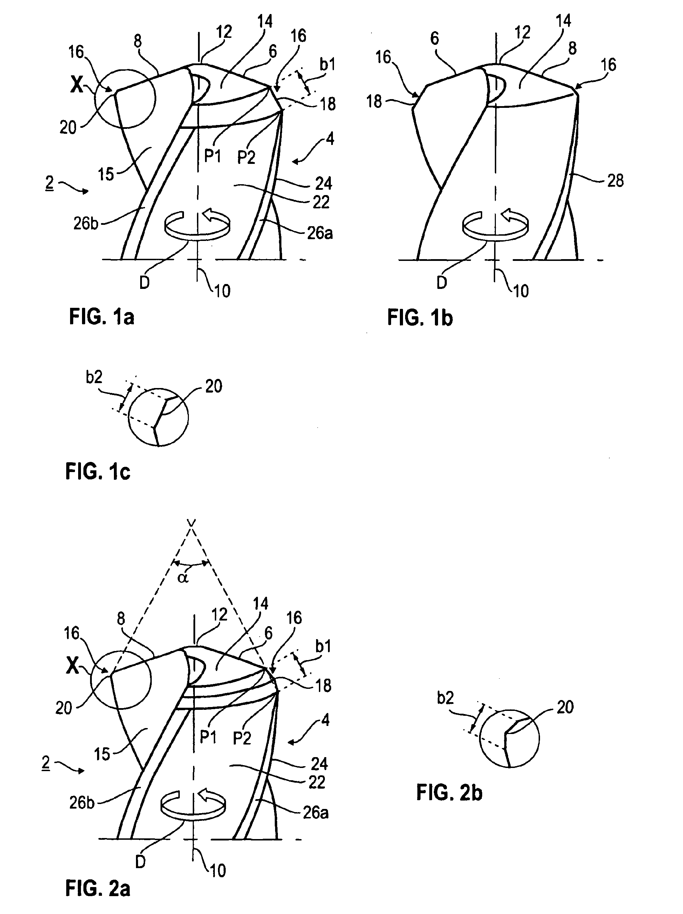

- Fig. 1a: eine Seitenansicht eines als Spiralbohrer ausgebildeten Rundlaufwerk- zeugs im Bereich der Bohrerspitze,
- Fig. 1 b: eine Seitenansicht auf die Bohrerspitze gemäß Fig. 1a nach einer 180°- Drehung um ihre Rotationsachse,
- Fig. 1 c: eine vergrößerte Darstellung des mit "X" gekennzeichneten Bereichs in der Fig. 1a,
- Fig. 2a, 2b: eine Seitenansicht einer Bohrerspitze in einer zweiten Ausgestaltung, bei der die Fasen als Doppelfasen ausgebildet sind, wobei Fig. 2b den mit "X" gekennzeichneten Bereich der Fig. 2a in einer vergrößerten Darstellung zeigt,
- Fig. 3a,3b: eine zu den Fig. 2a,2b vergleichbare Darstellung einer dritten Ausfüh- rungsvariante, bei der zur Ausbildung der Fasen jeweils ein Eckenradius vorgesehen ist,
- Fig. 4a,4b: eine zu den Fig. 2a,2b vergleichbare Darstellung einer vierten Ausfüh- rungsvariante, bei der die beiden Fasen verschiedenartig ausgebildet sind,
- Fig. 5: eine Stirnansicht auf eine asymmetrisch gestaltete Bohrerspitze eines Bohrers und
- Fig. 6a, 6b: eine Querschnittdarstellung eines Bohrers mit der in Fig. 5 dargestellten Bohrerspitze, wobei die Fig. 6b eine vergrößerte Darstellung des mit ei- nem Kreis gekennzeichneten Bereichs in Fig. 6a ist.

In den Figuren sind gleich wirkende Teile mit den gleichen Bezugszeichen versehen.

Die einzelnen Details und Merkmale werden nachfolgend anhand eines als Spiralbohrer 2 ausgebildeten Rundlaufwerkszeugs erläutert. Der nur ausschnittsweise dargestellte Spiralbohrer 2 weist als Schneidkopf eine Bohrerspitze 4 auf, an der stirnseitig mehrere, im Ausführungsbeispiel zwei Hauptschneiden 6,8 ausgebildet sind. Nachfolgend wird die eine Hauptschneide als Führungsschneide 6 und die andere Hauptschneide als Freischneide 8 bezeichnet. Die beiden Hauptschneiden 6,8 sind im Bereich einer Mittenachse des Bohrers 2, die zugleich eine Rotationsachse 10 bildet, über eine Querschneide 12 miteinander verbunden. Beim Einsatz rotiert der Bohrer 2 in Drehrichtung D um die Rotationsachse 10. Die Bohrerspitze 4 ist in etwa kegelmantelförmig ausgebildet, so dass die Hauptschneiden 6,8 von der Querschneide 12 ausgehend schräg nach außen verlaufen. An eine jeweilige Hauptschneide 6,8 schließt sich - entgegen der Drehrichtung D gesehen - eine jeweilige Hauptfreifläche 14 an. In Drehrichtung D vorgelagert zu den Hauptschneiden 6,8 ist jeweils eine Spannut 15 in den Bohrerkörper eingebracht. Diese verläuft im Ausführungsbeispiel spiralförmig. Die jeweilige Hauptschneide 6,8 erstreckt sich grob in etwa in radialer Richtung bis zu einem Schneideck 16, wobei am Schneideck 16 jeweils eine Eckenfase ausgebildet ist. Die Führungsschneide 6 weist hierbei eine nachfolgend als Schruppfase 18 bezeichnete Eckenfase und die Freischneide 8 eine nachfolgend als Schlichtfase 20 bezeichnete Eckenfase auf.

Wie aus den Fig. 1 bis 4 unmittelbar hervorgeht, sind die beiden Fasen 18,20 im Hinblick auf ihre Größe stark unterschiedlich ausgebildet. Die Schruppfase 18 weist hierbei eine Breite b1 und die Schlichtfase 20 eine Breite b2 auf, die um ein Vielfaches kleiner ist als die Breite b1. Die Breite ist hierbei definiert durch den Abstand zwischen dem Übergangs- oder Knickpunkt P1 zwischen dem in etwa geradlinigen Verlauf der jeweiligen Hauptschneide 6,8 zur jeweiligen Fase 18,20 und dem weiteren Übergangs- oder Knickpunkt P2, an dem die jeweilige Fase 18,20 in die Umfangsseite, dem so genannten Bohrerrücken 22 übergeht. Die beiden Fasen 18,20 gehen hierbei jeweils in eine entlang der jeweiligen Spannut 15 verlaufende Nebenschneide 24 über.

Das Verhältnis b2 : b1 liegt vorzugsweise im Bereich von 1 : 2 bis 1 : 50 und insbesondere im Bereich von 1 : 25 bis 1 : 50. Die beiden Fasen 18,20 sind bezüglich der Rotationsachse 10 um den gleichen Neigungswinkel geneigt. Bei Bedarf können auch ungleiche Neigungswinkel vorgesehen sein. Insgesamt schließen die beiden Führungsfasen 18,20 einen Fasenspitzenwinkel α ein, der im Ausführungsbeispiel etwa im Bereich zwischen 60 und 90°, vorzugsweise im Bereich von 80°, liegt.

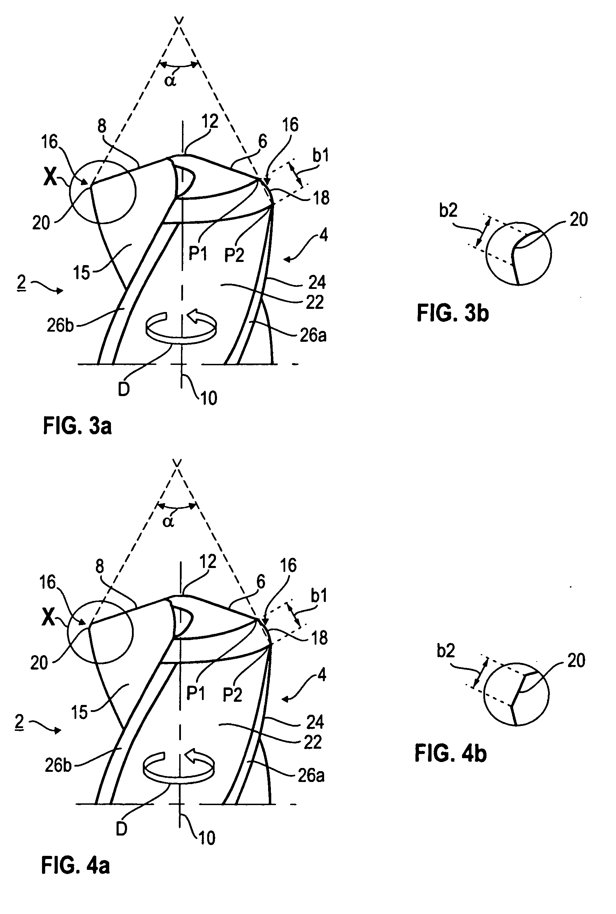

Während beim Ausführungsbeispiel zu der Fig. 1 die beiden Fasen 18,20 als einfache Schrägfasen ausgebildet sind, ist gemäß dem Ausführungsbeispiel nach Fig. 2 vorgesehen, dass die Fasen 18,20 jeweils als Doppelfasen ausgebildet sind, dass sich also zwei Schrägfasen unmittelbar aneinander anschließen. Anstelle der Anordnung von zwei oder auch mehrerer einander nachgeordneter Schrägfasen kann die jeweilige Schruppfase 18 oder Schlichtfase 20 auch als Radius ausgebildet sein, wie dies in der Fig. 3 dargestellt ist. Schließlich sind auch beliebige Kombinationen möglich, die jeweils in Abhängigkeit des jeweiligen Anforderungsprofils ausgewählt werden. So besteht die Möglichkeit, wie in Fig. 4 gezeigt, die Schruppfase 18 als Rundfase und die Schlichtfase 20 als Schrägfase auszubilden. Umgekehrt kann auch die Schlichtfase als Rundfase und die Schruppfase 18 als Schrägfase oder als Doppelfase etc. ausgebildet sein.

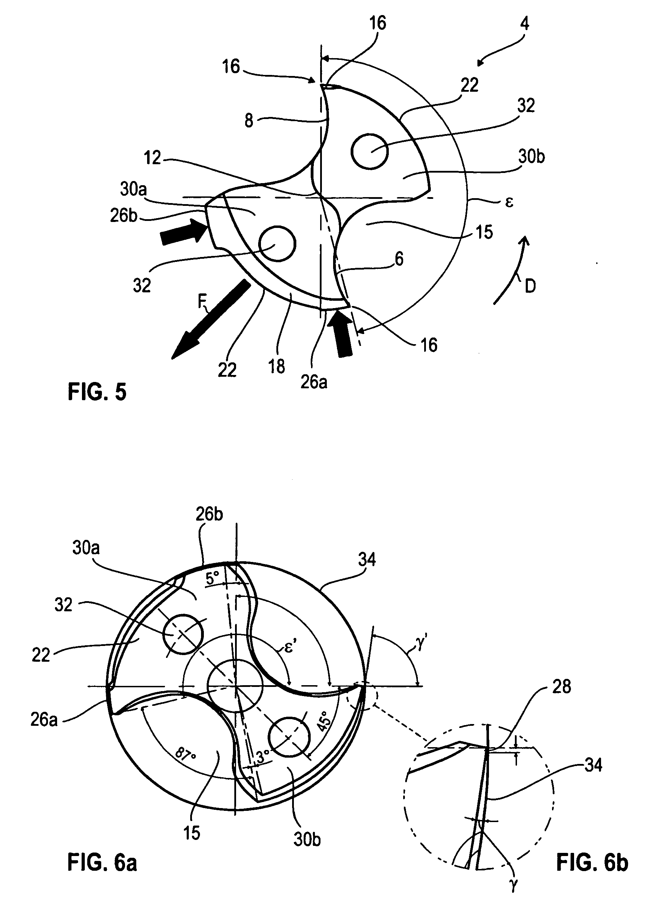

Der in den Fig. 1 bis 4 dargestellte Bohrer ist insgesamt bezüglich der Rotationsachse 10 unsymmetrisch, wie nachfolgend noch ausführlich anhand der Fig. 5 und 6 erläutert wird. Wie bereits in den beiden Seitendarstellungen der Fig. 1a und 1b in der Gegenüberstellung zu erkennen ist, sind an dem sich an die Führungsschneide 6 anschließenden Bohrerrücken 22 randseitig eine erste und eine zweite Stützfase 26a,26b vorgesehen, die jeweils entlang der jeweiligen Spannut 15 verlaufen. Im Unterschied hierzu weist der sich an die Freischneide 8 anschließende Bohrerrücken 22 lediglich eine nachfolgend als Restführungsfase 28 bezeichnete Führungsfase auf. Auch ist durch die gestrichelte Darstellung der Freischneide 8 in Fig. 1b bereits angedeutet, dass die beiden Schneiden 6,8 bezüglich einer 180°-Drehung nicht exakt gegenüberliegend angeordnet sind.

Aus der Aufsichtsdarstellung gemäß Fig. 5 ist zu entnehmen, dass die beiden Hauptschneiden 6, 8 über die Querschneide 12 miteinander verbunden sind. Die beiden Hauptschneiden 6, 8, gemessen an den Schneidecken 16, schließen einen Teilungswinkel ε zwischen sich ein, welcher kleiner als 180° und insbesondere im Bereich zwischen 160° und 175° liegt. Im Ausführungsbeispiel beträgt der Teilungswinkel ε vorzugsweise 167°. Wie sich aus der Aufsicht der Fig. 5 weiterhin ergibt, ist der Bohrer 2 auch im Hinblick auf die Materialverteilung bezüglich der Symmetrieachse (Rotationsachse 10) unsymmetrisch aufgebaut. Und zwar ist eine sich an die Führungsschneide 6 anschließende erste Bohrerhälfte 30a massiver ausgebildet, als die sich an die Freischneide 8 anschließende zweite Bohrerhälfte 30b. In der Aufsicht teilt die in etwa S-förmig gewundene Querschneide 12 die beiden Teilhälften des Bohrers 2 voneinander. An der durch den Bohrerrücken 22 gebildeten Umfangswand schließt sich vom Schneideck 16 mit der Schruppfase 18 ausgehend die erste Stützfase 26a an. Entgegen der Drehrichtung D betrachtet am Ende des Bohrerrückens 22 ist die zweite Stützfase 26b angeordnet. Diese weist eine etwa um die Hälfte bis doppelt so große Ausdehnung bzw. Breite auf wie die erste Stützfase 26a. Die erste Stützfase 26a überstreicht etwa einen Drehwinkel im Bereich von 10° bis 15°. Die sich an die Führungsschneide 6 anschließende erste Bohrerhälfte 30a überdeckt einen Winkelbereich größer 90°, insbesondere etwa 95° bis 120°. Im Gegensatz hierzu überstreicht die zweite Bohrerhälfte 30b einen Winkelbereich, der kleiner ist und insbesondere unter 90° liegt sowie bevorzugt größer 70°ist.

Wie weiterhin aus der Aufsicht aus Fig. 5 zu entnehmen ist, ist im Anschluss an die Führungsschneide 6 die deutlich erkennbare Schruppfase 18 ausgebildet. Im Unterschied hierzu ist beim Schneideck 16 der Freischneide 8 die deutlich kleinere Schlichtfase 20 ausgebildet, die sich nur über einen geringen Winkelbereich von beispielsweise 10° erstreckt. Dem gegenüber erstreckt sich die Schruppfase 18 durchgehend von der ersten Stützfase 26a bis zur zweiten Stützfase 26b.

Aus der Fig. 5 sowie der Fig. 6 sind weiterhin zwei Kühlmittelkanäle 32 zu entnehmen, die stirnseitig aus dem Bohrer austreten.

In Fig. 6 ist ergänzend noch eine Loch- oder Bohrungswand 34 dargestellt. Die beiden Stützfasen 26a, 26b sind auf einer durch den Bohrerradius definierten Umfangslinie angeordnet, so dass sie sich flächig an die beim Zerspanungsvorgang gebildete Bohrungswand 24 anlegen. Insgesamt ist dadurch eine gute Abstützung erzielt. Gleichzeitig stützt sich die Restführungsfase 28 nur an einem kleinen Teilbereich an der Bohrungswand 34 ab, wie insbesondere aus der vergrößerten Darstellung der Fig. 6b zu entnehmen ist. Die Abstützung der Restführungsfase 28 überstreicht hierbei einen Winkelbereich, der vorzugsweise kleiner 1° beträgt. An der Restführungsfase 28 ist vielmehr ein Freiwinkel γ ausgebildet, so dass ein großflächige Anliegen an der Bohrungswand 34 verhindert ist. Der Freiwinkel γ liegt hierbei im Bereich von einigen Grad, beispielsweise im Bereich von 10°. In der Fig. 6 ist der zum Teilungswinkel γ komplementäre Teilungswinkel ε' dargestellt. Aus der Fig. 6 sind weitere Winkelwerte unmittelbar zu entnehmen, die für das Ausführungsbeispiel gewählt sind. Eine Abweichung von diesen Winkelangaben kann bei alternativen Ausführungsvarianten natürlich vorgesehen sein. Aus Fig. 6a ist weiterhin der zum Freiwinkel γ komplementäre Freiwinkel γ' zu entnehmen, der im Ausführungsbeispiel bei 81° liegt.

Aufgrund der asymmetrischen Ausgestaltung des Bohrers weist dieser eine gewollte unsymmetrische Kraftaufteilung auf. Beim Rotieren um die Rotationsachse 10 ergibt sich daher eine resultierende Radialkraft F, die dazu führt, dass der Bohrer 30 sich mit seiner Bohrerhälfte 30a gegen die Bohrungswand 34 abstützt. Dadurch werden die Stützfasen 26a, 26b belastet, wie durch die Pfeile angedeutet ist (vgl. Fig. 5). Gleichzeitig wird die gegenüberliegende Restführungsfase 28 entlastet, so dass eine asymmetrische Belastung des Bohrers insgesamt auftritt.

Durch die unterschiedliche Ausgestaltung der Schruppfase 18 und der Schlichtfase 20 in Verbindung mit der gezielten Abstützung durch die Stützfasen 26a, 26b wird ein wesentlich besserer Rundlauf und eine bessere Zylinderform der Bohrung erreicht.

## Patentansprüche

1. Rundlaufwerkzeug (2), insbesondere Bohrer, mit einem sich entlang einer Rotationsachse (10) erstreckenden Schneidkopf (4), der mehrere sich radial nach außen erstreckende Hauptschneiden (6,8) aufweist, die jeweils am Umfang des Schneidkopfes (4) an einem eine Eckenfase aufweisenden Schneideck (16) enden, **dadurch gekennzeichnet, dass** die am Schneideck (16) der jeweiligen Hauptschneide (6,8) ausgebildeten Eckenfasen unterschiedlich, nämlich als Schruppfase (18) und als Schlichtfase (20), ausgebildet sind.

2. Rundlaufwerkzeug (2) nach Anspruch 1
**dadurch gekennzeichnet,**
**dass** die Schruppfase (18) größer als die Schlichtfase (20) ist.

3. Rundlaufwerkzeug (2) nach Anspruch 2,
**dadurch gekennzeichnet,**
**dass** die Schruppfase (18) um mehr als das 2-fache größer ist als die Schlichtfase (20).

4. Rundlaufwerkzeug (2) nach Anspruch 2 oder 3,
**dadurch gekennzeichnet,**
**dass** das Größenverhältnis zwischen Schlichtfase (20) und Schruppfase (18) zwischen 1 : 25 und 1 : 50 liegt.

5. Rundlaufwerkzeug (2) nach einem der vorhergehenden Ansprüche,
**dadurch gekennzeichnet,**
**dass** die Schlicht- und die Schruppfase (20, 18) unter dem gleichen Neigungswinkel zur Rotationsachse (10) geneigt sind.

6. Rundlaufwerkzeug (2) nach einem der vorhergehenden Ansprüche,
**dadurch gekennzeichnet,**
**dass** die Schlicht- und die Schruppfase (20, 18) einen Fasenspitzenwinkel (α) zwischen sich einschließen, der zwischen 40° und 100° liegt.

7. Rundlaufwerkzeug (2) nach einem der vorhergehenden Ansprüche,
**dadurch gekennzeichnet,**
**dass** der Schneidkopf (4) bezüglich der Rotationsachse (10) asymmetrisch ausgebildet ist und die Hauptschneide mit der Schruppfase (18) als Führungsschneide (6) und die Hauptschneide mit der Schlichtfase (20) als Freischneide (8) ausgebildet ist.

8. Rundlaufwerkzeug (2) nach Anspruch 7,
**dadurch gekennzeichnet,**
**dass** die Führungsschneide (6) und die Freischneide (8) unter einem von 180° verschiedenen Teilungswinkel (ε), insbesondere unter einem Teilungswinkel (ε) im Bereich zwischen 185° und 200° zueinander angeordnet sind.

9. Rundlaufwerkzeug (2) nach Anspruch 7 oder 8,
**dadurch gekennzeichnet,**
**dass** in Drehrichtung (D) nachfolgend zur Führungsschneide (6) am Außenumfang eine Stützfase (26b) vorgesehen ist.

## Claims

1. Rotary tool (2), in particular a drill, comprising a cutting head (4) which extends along a rotation axis (10) and has a plurality of main cutting edges (6, 8) which extend radially outward and each end at the circumference of the cutting head (4) at a cutting corner (16) having a corner bevel, **characterized in that** the corner bevels formed on the cutting corner (16) of the respective main cutting edge (6,8) are designed to be different, namely as a roughing bevel (18) and as a finishing bevel (20).

2. Rotary tool (2) according to Claim 1,
**characterized in that**
the roughing bevel (18) is larger than the finishing bevel (20).

3. Rotary tool (2) according to Claim 2,
**characterized in that**
the roughing bevel (18) is more than twice as large as the finishing bevel (20).

4. Rotary tool (2) according to Claim 2 or 3, **characterized in that**
the size ratio between finishing bevel (20) and roughing bevel (18) is between 1:25 and 1:50.

5. Rotary tool (2) according to one of the preceding claims,
**characterized in that**
the finishing bevel (20) and the roughing bevel (18) are inclined at the same inclination angle relative to the rotation axis (10).

6. Rotary tool (2) according to one of the preceding claims,
**characterized in that**
the finishing bevel (20) and the roughing bevel (18) enclose a bevel point angle (α) between them which is between 40° and 100°.

7. Rotary tool (2) according to one of the preceding claims,
**characterized in that**
the cutting head (4) is designed to be asymmetrical with respect to the rotation axis (10), and the main cutting edge having the roughing bevel (18) is designed as guide cutting edge (6) and the main cutting edge having the finishing bevel (20) is designed as free cutting edge (8).

8. Rotary tool (2) according to Claim 7,
**characterized in that**
the guide cutting edge (6) and the free cutting edge (8) are arranged at a pitch angle (ε) different from 180°, in particular at a pitch angle (ε) within the range of between 185° and 200°.

9. Rotary tool (2) according to Claim 7 or 8, **characterized in that**
a supporting bevel (26b) is provided on the outer circumference following the guide cutting edge (6) in the rotation direction (D).

## Revendications

1. Outil rotatif (2), en particulier foret, avec une tête de coupe (4) s'étendant le long d'un axe de rotation (10), qui présente plusieurs tranchants principaux (6, 8) s'étendant radialement vers l'extérieur, qui se terminent respectivement à un coin de coupe (16) présentant un chanfrein de coin à la périphérie de la tête de coupe (4), **caractérisé en ce que** les chanfreins de coin formés sur le coin de coupe (16) du tranchant principal respectif (6, 8) sont réalisés de façon différente, à savoir comme chanfrein de dégrossissage (18) et comme chanfrein de finition (20) .

2. Outil rotatif (2) selon la revendication 1, **caractérisé en ce que** le chanfrein de dégrossissage (18) est plus grand que le chanfrein de finition (20).

3. Outil rotatif (2) selon la revendication 2, **caractérisé en ce que** le chanfrein de dégrossissage (18) est plus de 2 fois plus grand que le chanfrein de finition (20).

4. Outil rotatif (2) selon la revendication 2 ou 3, **caractérisé en ce que** le rapport de grandeur entre le chanfrein de finition (20) et le chanfrein de dégrossissage (18) est compris entre 1:25 et 1:50.

5. Outil rotatif (2) selon l'une quelconque des revendications précédentes, **caractérisé en ce que** le chanfrein de finition (20) et le chanfrein de dégrossissage (18) sont inclinés du même angle d'inclinaison par rapport à l'axe de rotation (10).

6. Outil rotatif (2) selon l'une quelconque des revendications précédentes, **caractérisé en ce que** le chanfrein de finition (20) et le chanfrein de dégrossissage (18) forment entre eux un angle de pointe de chanfrein (α), qui est compris entre 40° et 100°.

7. Outil rotatif (2) selon l'une quelconque des revendications précédentes, **caractérisé en ce que** la tête de coupe (4) est réalisée de façon asymétrique par rapport à l'axe de rotation (10) et le tranchant principal avec le chanfrein de dégrossissage (18) est réalisé sous la forme d'un tranchant de guidage (6) et le tranchant principal avec le chanfrein de finition (20) est réalisé sous la forme d'un tranchant libre (8).

8. Outil rotatif (2) selon la revendication 7, **caractérisé en ce que** le tranchant de guidage (6) et le tranchant libre (8) sont disposés l'un par rapport à l'autre sous un angle de séparation (α) différent de 180°, en particulier sous un angle de séparation (α) situé dans la plage de 185° à 200°.

9. Outil rotatif (2) selon la revendication 7 ou 8, **caractérisé en ce qu'**il est prévu un chanfrein de soutien (26b) à la périphérie extérieure après le chanfrein de guidage (6) dans le sens de rotation (D).
